# EUROPEAN PATENT APPLICATION

(11) **EP 2 208 662 A1**
(43) Date of publication of application: **21.07.2010**
(21) Application number: 10150352.2
(22) Date of filing: 08.01.2010
(51) Int. Cl.: B62D 63/06

(54) **Trailer**

(30) Priority: 10.01.2009 US 351830
(71) Applicant: Lifetime Products, Inc., Clearfield, UT 84016 (US)
(72) Inventor: Winter, David C., Layton, UT 84040 (US); Smith, Brandon, South Ogden, UT 84405 (US); Nye, S. Curtis, Clinton, UT 84015 (US); Johnson, Mitch, South Weber, UT 84405 (US); Larsen, Jered, Bountiful, UT 84010 (US); Fuller, Doug, Odgen, UT 84404 (US)
(74) Representative: Browne, Robin Forsythe

(57) **Abstract**

A folding trailer (328,336) may be capable of moving between a use position and a storage position. The folding trailer may include an axle (344) that is capable of moving between a first position in which the axle (344) is generally aligned along an axis and a second position in which the axle (344) is disposed in a folded configuration. The folding trailer (328,336) may also include a towing arm (338) that is movable between an extended position in which a portion of the towing arm (338) extends beyond the front portion of the frame to facilitate attached to a
towing vehicle and a collapsed position in which the towing arm (338) is at least substantially disposed underneath the frame. In addition, the trailer may include an adjustment assembly (342) that is sized and configured to adjust the position of the axle (344) between the first and second positions, and adjust the position of the towing arm (338) between the extended and collapsed positions. Advantageously, the adjustment assembly (342) may have different configurations and arrangements. In addition, the adjustment assembly may be used to secure the trailer (328,326) in the use or storage positions.

## Description

### Field of the Invention

The present invention generally relates to storage and/or transportation systems and, in particular, to trailers.

### Description of Related Art

Conventional trailers may be attached to an automobile to allow the automobile to tow the trailer. Some known trailers have a relatively large size, which may allow the trailer to hold a large number of items or larger items. These relatively large trailers, however, may be difficult to maneuver and store. Other known trailers may have a relatively small size, which may be more easily maneuvered and stored than larger trailers. Disadvantageously, the smaller trailers may not be able to hold as many items and/or as large of items as the larger trailers.

### BRIEF SUMMARY OF EMBODIMENTS OF THE INVENTION

A need therefore exists for a trailer that eliminates or diminishes the disadvantages and problems described above.

One aspect is a trailer that may be used to store and/or transport various items. The trailer may be selectively moved between an extended or use position and a collapsed or storage position. Advantageously, the trailer may be efficiently moved and/or stored in the collapsed or storage position.

Another aspect is a trailer that may include a bed and the bed may advantageously be disposed in one or more positions to allow the trailer to be used and stored. For example, the bed may include a plurality of panels that fold together to provide a more compact bed.

Yet another aspect is a trailer that may include a frame and the frame may move among a variety of positions to allow the trailer to be used and stored. For example, the frame may include a plurality of supports and the supports may fold together to provide a more compact frame.

Still another aspect is a trailer that may include an axle, which may be movable between one or more positions to allow the trailer to be disposed in the use and storage positions. For example, the axle may fold together to provide a more compact design.

A further aspect is a trailer that may include a pair of wheels that may be spaced apart a first distance when the trailer is in the extended or use position and a second distance when the trailer is in a collapsed or storage position. Advantageously, when the trailer is in the collapsed or storage position, one or both of the wheels may still be used, which may help in moving the collapsed trailer.

Another aspect is a trailer that may include an apparatus which assists in moving the trailer move between the extended or use position and the collapsed or storage position. The apparatus may include arms, wheels and a handle. The arms may contact or engage one wheel of the trailer and the handle may be used to manipulate the arms to lift the trailer's wheel away from the support surface. The apparatus may then be used to move the trailer between the extended or use position and the collapsed or storage position.

Still another aspect is a trailer that may include a pair of wheels that allow the trailer to be towed. The trailer may also include a separate wheel assembly that is sized and configured to assist in moving the trailer between the use and storage positions. For example, the wheel assembly may be sized and configured to move between a first position in which the wheel assembly engages a support surface and a second position in which the wheel assembly is spaced apart from the support surface. When the wheel assembly engages the support surface, one of the wheels of the trailer may be spaced apart from the support surface. This may allow the trailer to be easily moved between the extended position and the collapsed position.

Yet another aspect is a trailer that may include an arm which is sized and configured to be connected to a vehicle. The arm may be moved between an extended or use position and a collapsed or storage position. The trailer may also include a support assembly that may support the arm. In addition, the support assembly may facilitate moving the arm between the extended or use position and the collapsed or storage position. The support assembly, for example, may include a first support member and a second support member. The first support member may be pivotally connected to a frame of the trailer and pivotally connected to the arm. The second support member may be pivotally connected to a frame of the trailer and pivotally connected to the arm.

A further aspect is a trailer that may be quickly and easily moved between the use and storage positions. In particular, the trailer may be folded into the storage position to create a more compact and easily storable structure. Preferably, the trailer includes a multiple piece axle that is disposed in a generally aligned, straight configuration when the trailer is in the use position. When the trailer is being folded into the collapsed position, the center portion of the axle preferably moves towards the rear of the trailer and the center portion of the axle is folded together. Because the towing arm or tongue may be connected to the axle, the rearward movement of the axle may retract the towing arm while the trailer is being folded into the collapsed position. Advantageously, this may facilitate storage of the trailer because the towing arm may be disposed entirely or substantially beneath the bed or frame of the trailer.

A still further aspect is a trailer that may include components that fold in different planes when the trailer is moved from the use position to the storage position. For example, the axle may fold rearwardly and in a generally horizontal plane while the trailer bed and frame may fold upwardly and in a generally vertical plane. This may create a trailer with increased strength and rigidity because different components fold in different planes. In addition, when the axle is in the folded position, the folded sections of the axle may be disposed proximate or adjacent to each other. Similarly, when the bed and frame are in the folded position, the folded sections of the bed and frame may be disposed proximate or adjacent to each other. Advantageously, this may allow the trailer to be stored in a very compact configuration.

Still another aspect is a trailer that may include an actuating member or mechanism to facilitate moving the trailer between the use and storage positions. The actuating member or mechanism may include cables, pulleys, cranks, jacks and the like to help move the trailer between the use and storage positions. For example, the actuating member or mechanism may help pull the trailer into the storage position and push the trailer into the use position. Advantageously, the actuating member or mechanism may provide controlled movement of the trailer between the use and storage positions. Significantly, because the movement of the trailer may always be controlled, the trailer may not inadvertently or unexpectedly move, which may make the trailer easier to use. In addition, the actuating member or mechanism may help maintain the trailer in the use or storage positions, and prevent the trailer suddenly moving from the use or storage position.

A further aspect is a trailer that may include a towing arm or tongue and an actuating member or mechanism. The actuating member or mechanism may be connected to the towing arm or tongue. For example, the actuating member or mechanism may be connected to a front portion of the towing arm or tongue. The actuating member or mechanism may include a crank and the crank may be connected to and/or disposed proximate the front portion of the towing arm or tongue. Desirably, this may allow the crank to be readily used to help the actuating member or mechanism move the trailer between the use and storage positions.

Another further aspect is a trailer that may include a towing arm or tongue, an axle and an actuating member or mechanism. The actuating member or mechanism may include an adjustment assembly that may sized and configured to adjust the position of the arm and the axle. The adjustment assembly may include connecting members, a shaft and a sliding mechanism such as a carriage assembly. In particular, the connecting members may be pivotally or movably connected to the axle by fasteners, pins, brackets, connectors or the like. The connecting members may also be pivotally or movably connected to the carriage assembly by a fastener, pin, bracket, connector or the like. The carriage assembly may be coupled to the shaft. For example, the carriage assembly and the shaft may be threadably connected. Additionally, the shaft may be connected to the arm using a mount. Specifically, the shaft may be inserted through an opening in the mount and the position of the mount along the shaft may be generally fixed using any suitable means. The shaft may also be connected to a crank, handle and/or other device that may be used to rotate the shaft. Rotating the shaft may help move the arm and the axle between the extended and collapsed positions. For example, as the shaft is rotated in a first direction, the threads of the shaft may engage the threads of the carriage assembly to move the carriage assembly away from the mount. As the carriage assembly moves away from the mount, the connecting members may move the axle and the arm toward the extended position and away from the collapsed position. On the other hand, if the shaft is rotated in an opposing second direction, the threads of the shaft may engage the threads of the carriage assembly to move the carriage assembly towards the mount. As the carriage assembly moves towards the mount, the connecting members may move the axle and the arm toward the collapsed position and away from the extended position. Advantageously, the shaft may be rotated by a number of different types of devices such as a hand crank or a motor. If a motor is used, that may allow the trailer to be automatically opened and closed. In some embodiments, portions of the mount and the carriage assembly may be slidably and/or telescopically coupled. For example, the mount may include a tube, and the carriage assembly may include a tube that may be slidably and/or telescopically coupled to the tube of the mount. The tube of the mount may be connected to the arm using, for example, fasteners, pins, brackets, connectors, welds and/or any other suitable means. If desired, the crank, handle and/or other device used to rotate the shaft may be positioned to rotate in the same axis in which the shaft rotates or in a different axis. For example, in some embodiments, a coupler may be used to interconnect the shaft and the crank, handle and/or other device to allow the crank, handle and/or other device to be positioned at an angle relative to the shaft (such as about a 90 degree angle, an oblique angle or any other suitable angle), which may allow the crank, handle and/or other device to rotate in a different axis than the axis in which the shaft rotates. The coupler may also be configured to allow the crank, handle and/or other device to be generally aligned with the shaft, which may allow the crank, handle and/or other device to rotate in the generally same axis in which the shaft rotates. In some embodiments, the axle may include a first center portion and a second center portion pivotally or otherwise movably connected to the first center portion. The first center portion may include one or more elongated supports. The second center portion include one or more elongated supports.

Another aspect is a folding trailer that may be capable of moving between a use position and a storage position. The folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration; a towing arm movable between an extended position in which a portion of the towing arm extends beyond the front portion of the frame to facilitate attached to a towing vehicle and a collapsed position in which the towing arm is at least substantially disposed underneath the frame; and an adjustment assembly that is sized and configured to adjust the position of the axle between the first position and the second position, the adjustment assembly also being sized and configured to adjust the position of the towing arm between the extended position and the collapsed position.

Yet another aspect is a folding trailer that may be capable of moving between a use position and a storage position, and the folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration; a towing arm movable between an extended position in which a portion of the towing arm extends beyond the front portion of the frame to facilitate attachment to a towing vehicle and a collapsed position in which the towing arm is at least substantially disposed underneath the frame; and an adjustment assembly that is sized and configured to adjust the position of the axle throughout an at least substantially continuous range of positions between and including the first position and the second position, the adjustment assembly also being sized and configured to adjust the position of the towing arm throughout an at least substantially continuous range of positions between and including the extended position and the collapsed position. The adjustment assembly may include a crank disposed at least proximate to a front portion of the towing arm, and the crank may be sized and configured to rotate in a first direction and a second direction. The crank may be sized and configured to, when rotated in the first direction, adjust the position of the axle towards the first position and adjust the position of the towing arm towards the extended position. In addition, the crank may be sized and configured to, when rotated in the second direction, adjust the position of the axle towards the second position and adjust the position of the towing arm towards the collapsed position. The adjustment assembly may be sized and configured to lock the axle in each position in the at least substantially continuous range of positions between and including the first position and the second position. The adjustment assembly may be sized and configured to lock the towing arm in each position in the at least substantially continuous range of positions between and including the extended position and the collapsed position. In one configuration, the adjustment assembly may further include a shaft and a carriage assembly that may be sized and configured to move along the shaft, the carriage assembly may be sized and configured to adjust the positioning of the axle and the towing arm by moving between positions along the shaft, and wherein the crank may be sized and configured to rotate the shaft to move the carriage assembly between the positions along the shaft. In one configuration, the adjustment assembly may further include a mount connected to the towing arm, the mount including a tube, a shaft connected to the tube of the mount, a carriage assembly that may be sized and configured to move along the shaft. In this configuration, the carriage assembly may be sized and configured to adjust the positioning of the axle and the towing arm by moving between positions along the shaft, and the carriage assembly may include a tube that telescopically couples the tube of the mount and an engaging member connected to and disposed within the tube of the carriage assembly. The engaging member may be sized and configured to engage the shaft. In addition, the crank may be sized and configured to rotate the shaft to move the carriage assembly between the positions along the shaft.

Still another aspect is a folding trailer that may be capable of moving between a use position and a storage position, and the folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration, the axle being located in generally the same plane in the first position and the second position, the axle being sized and configured to move in a generally rearward direction when the axle is moved from the first position to the second position; a towing arm, the towing arm being positioned in an extended position when the axle is in the first position, the towing arm being positioned in a retracted position when the axle in the second position, the towing arm being sized and configured to move in the generally rearward direction from the extended position to the retracted position when the axle is moved from the first position to the second position; and an adjustment assembly that is sized and configured to adjust the position of the axle between the first position and the second position and adjust the position of the towing arm between the extended position and the collapsed position. The adjustment assembly may include a crank disposed at least proximate to a front portion of the towing arm, the crank being sized and configured to rotate in a first direction and a second direction; wherein the crank is sized and configured to, when rotated in the first direction, adjust the position of the axle towards the first position and adjust the position of the towing arm towards the extended position; and wherein the crank is sized and configured to, when rotated in the second direction, adjust the position of the axle towards the second position and adjust the position of the towing arm towards the collapsed position. In one configuration, the adjustment assembly may further include a shaft; and a carriage assembly that is sized and configured to move along the shaft, the carriage assembly being sized and configured to adjust the positioning of the axle and the towing arm by moving between positions along the shaft; wherein the crank is sized and configured to rotate the shaft to move the carriage assembly between the positions along the shaft. In one configuration, the adjustment assembly may further include a mount connected to the towing arm, the mount including a tube; a shaft connected to the tube of the mount; a carriage assembly that is sized and configured to move along the shaft, the carriage assembly being sized and configured to adjust the positioning of the axle and the towing arm by moving between positions along the shaft. In this configuration, the carriage assembly may include a tube that telescopically couples the tube of the mount; and an engaging member connected to and disposed within the tube of the carriage assembly, the engaging member being sized and configured to engage the shaft. In addition, the crank may be sized and configured to rotate the shaft to move the carriage assembly between the positions along the shaft.

Another aspect is a folding trailer that be capable of moving between a use position and a storage position, and the folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration; a towing arm movable between an extended position in which a portion of the towing arm extends beyond the front portion of the frame to facilitate attachment to a towing vehicle and a collapsed position in which the towing arm is at least substantially disposed underneath the frame; and an adjustment assembly that is sized and configured to adjust the position of the axle between the first position and the second position. The adjustment assembly may be sized and configured to adjust the position of the towing arm between the extended position and the collapsed position, and the adjustment assembly may include a mount connected to the towing arm, the mount including a tube; a shaft connected to the tube of the mount; a carriage assembly that is sized and configured to move along the shaft, the carriage assembly being sized and configured to adjust the positioning of the axle and the towing arm by moving between positions along the shaft. The carriage assembly may include a tube that telescopically couples the tube of the mount; and an engaging member connected to and disposed within the tube of the carriage assembly, the engaging member being sized and configured to engage the shaft. The adjustment assembly may further include a crank sized and configured to rotate the shaft to move the carriage assembly between the positions along the shaft. The crank may disposed at least proximate to a front portion of the towing arm.

Yet another aspect is a crank of a folding trailer. The crank may be connected to a front portion of a towing arm and/or may extend through an opening in the towing arm.

These and other aspects, features and advantages of the present invention will become more fully apparent from the following detailed description of preferred embodiments.

### BRIEF DESCRIPTION OF THE DRAWINGS

The appended drawings contain figures of preferred embodiments to further illustrate and clarify the above and other aspects, advantages and features of the present invention. It will be appreciated that these drawings depict only preferred embodiments of the invention and are not intended to limit its scope. The invention will be described and explained with additional specificity and detail through the use of the accompanying drawings in which:

Figure 1 is a perspective view of another exemplary trailer, illustrating the trailer in an extended or use position;

Figure 2 is a perspective view of the trailer shown in Figure 1, illustrating the trailer in a collapsed or storage position; and

Figure 3 is a perspective view of yet another exemplary trailer, illustrating the trailer in an extended or use position;

Figure 4 is a perspective view of a portion of the trailer shown in Figure 3, illustrating an exemplary arm and axle in an extended position;

Figure 5 is a perspective view of a portion of the trailer shown in Figure 4; and

Figure 6 is a perspective view of a portion of the trailer shown in Figure 5.

### DETAILED DESCRIPTION OF THE PREFERRED EMBODIMENTS

The present invention is generally directed towards a trailer. The principles of the present invention, however, are not limited to trailers. It will be understood that, in light of the present disclosure, the trailer disclosed herein can be successfully used in connection with other types of storage and/or transportation systems.

Additionally, to assist in the description of the trailer, words such as top, bottom, front, rear, right and left may be used to describe the accompanying figures. These figures may be, but are not necessarily, drawn to scale. It will be appreciated that the trailer and various components can also be located in a variety of desired positionsincluding various angles, sideways and even upside down. In addition, the trailer and various components of the trailer may have other sizes, shapes, configurations and arrangements that those shown in the drawings. A detailed description of the trailer now follows.

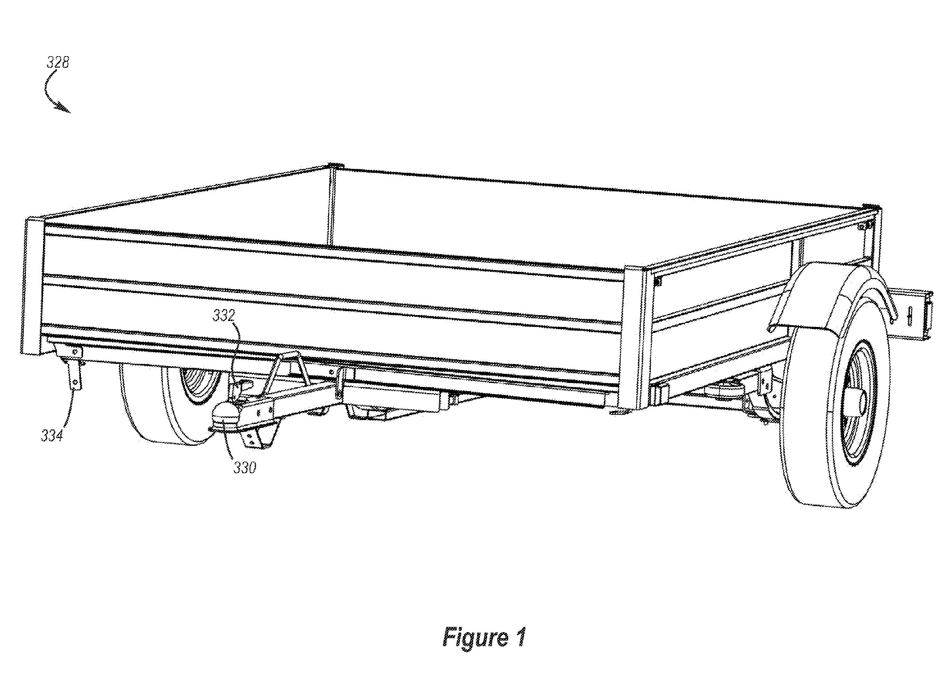

A trailer 328, such as shown in Figure 1, may be used to store and/or transport various items. An automobile or other motorized vehicle may pull or otherwise move the trailer. Exemplary automobiles typically include, but are not limited to, a car, a truck and a sport utility vehicle (SUV). Other exemplary motorized vehicles include all-terrain vehicles (ATVs) and lawn tractors. Desirably, the trailer 328 may be easily moved and used for various suitable purposes such as camping, landscaping, travelling (such as to the beach or other recreational locations), moving items, and the like.

If desired, while being towed by a first vehicle, the trailer 328 may be used to carry a second vehicle, and the second vehicle may later be used to tow the trailer. For example, the second vehicle may comprise an all-terrain vehicle (ATV), a lawn tractor or the like, which may be sold with and loaded onto the trailer 328. By selling the trailer 328 and the second vehicle together, a store may experience greater sales for both items because the store may offer the items for sale at a discounted price when they are sold together. Moreover, using the trailer 328 to carry the second vehicle may provide some customers the means for transporting the second vehicle home, which may have been otherwise too difficult for the customers. For instance, a customer may purchase the trailer and when the customer arrives home, he or she may remove the lawn tractor from the trailer and use the lawn tractor to move the trailer. It will be appreciated that the lawn tractor and trailer may be purchased together, individually or in other combinations depending, for example, upon the intended use of the trailer 328.

As shown in Figure 1, the trailer 328 may include a hitch coupler that is sized and configured to be connected to a trailer hitch. In particular, the arm of the trailer 328 may include, or be connected to, a hitch coupler 330 that is sized and configured to be coupled to the hitch of a towing vehicle. The hitch coupler 330 may be sized and configured to be coupled to a variety of differently sized and/or configured hitches, if desired.

The hitch coupler 330 may include a switch 332 that may be configured to move between an opened position and a closed position. When the switch 332 is in the opened position, the hitch coupler 330 may be coupled to the hitch of the towing vehicle. After the hitch coupler 330 is coupled to the hitch, the switch 332 may be closed to secure the hitch coupler to the hitch. If the switch 332 is closed before the hitch coupler 330 has been coupled to the hitch, however, the switch may prevent the hitch coupler from being coupled to the hitch. Thus, the switch 332 must first be opened to allow the hitch coupler 330 to be coupled to the hitch and the switch may then be closed to secure the hitch coupler to the hitch. It will be appreciated that the hitch coupler 330 and the switch 332 may have other suitable shapes, sizes, configurations and arrangements, but neither the hitch coupler nor the switch is required.

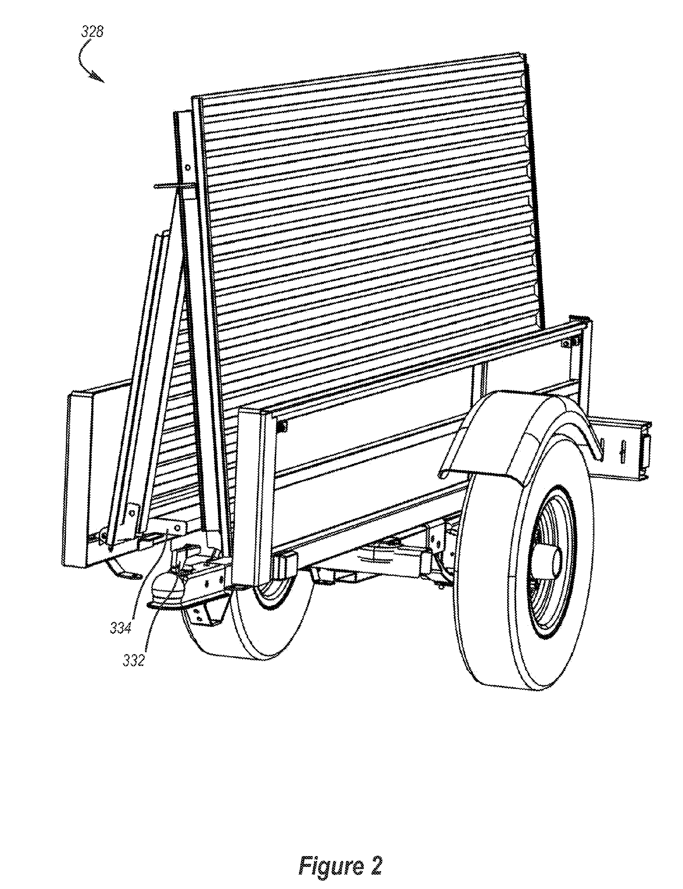

As shown in Figures 1-2, the trailer 328 may also include a coupling prevention device 334, which may include a protrusion, extension or the like. The coupling prevention device 334 is sized and configured to prevent the switch 332 from moving from the closed position to the opened position when the trailer 328 is in the storage position shown in Figure 2. Accordingly, this may help to prevent a user from moving the switch 332 to the opened position and attaching the trailer 328 to a towing vehicle when the trailer is in the storage position. It will also be appreciated that coupling prevention device 334 may have other suitable shapes, sizes, configurations and arrangements, but the prevention device is not required.

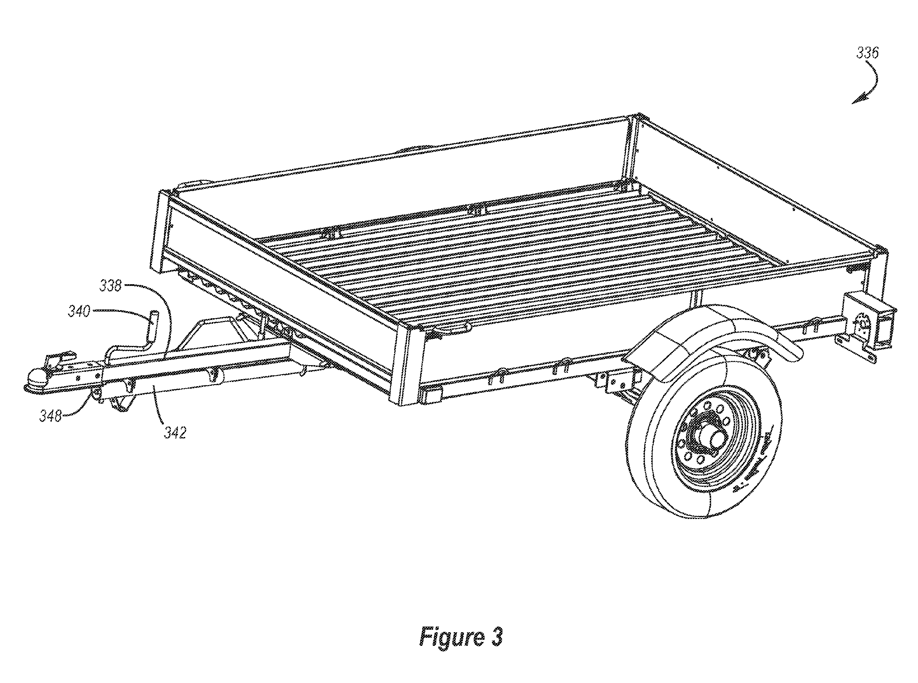

A mechanism that may be used to facilitate movement of a trailer between the use and collapsed positions is shown in Figures 3-6. In particular, as shown in Figures 3-4, a trailer 336 may include a towing arm 338 and an actuating mechanism. The actuating mechanism may include a crank 340, which may be connected to and/or disposed proximate the front portion of the arm 338. The crank 340 may also extend through an opening in the front portion of the arm. Desirably, this may allow the crank 340 to be readily used to help the actuating mechanism move the trailer 336 between a use position in which a bed and/or frame of the trailer is unfolded and a storage position in which the bed and/or frame of the trailer is folded. It will be appreciated, however, that the actuating mechanism may be connected to the front portion of the arm 338 and/or other portions of the arm and that the crank 340 may be disposed in other suitable locations.

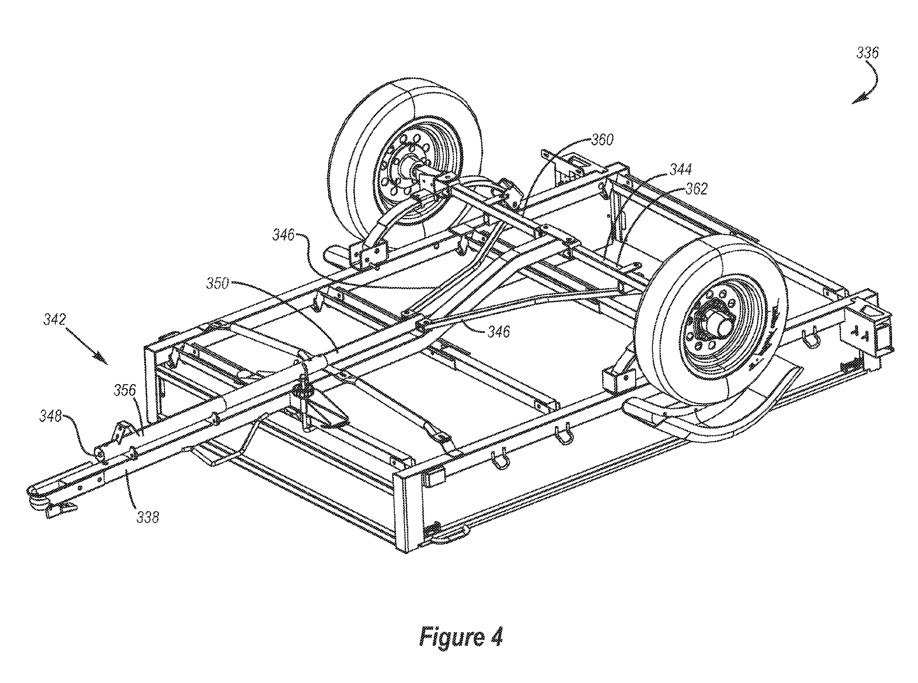

The actuating mechanism may also include an adjustment assembly 342 that may sized and configured to adjust the position of the arm 338 and/or the position of an axle 344. As shown in Figure 4, the adjustment assembly 342 may include connecting members 346, a shaft 348 and a carriage assembly 350.

The connecting members 344 may be movably connected to the axle 344 and/or the carriage assembly 350. For instance, the connecting members 344 may be pivotally connected to the axle 344 and the carriage assembly 350 using, for example, fasteners, pins, brackets, connectors or the like.

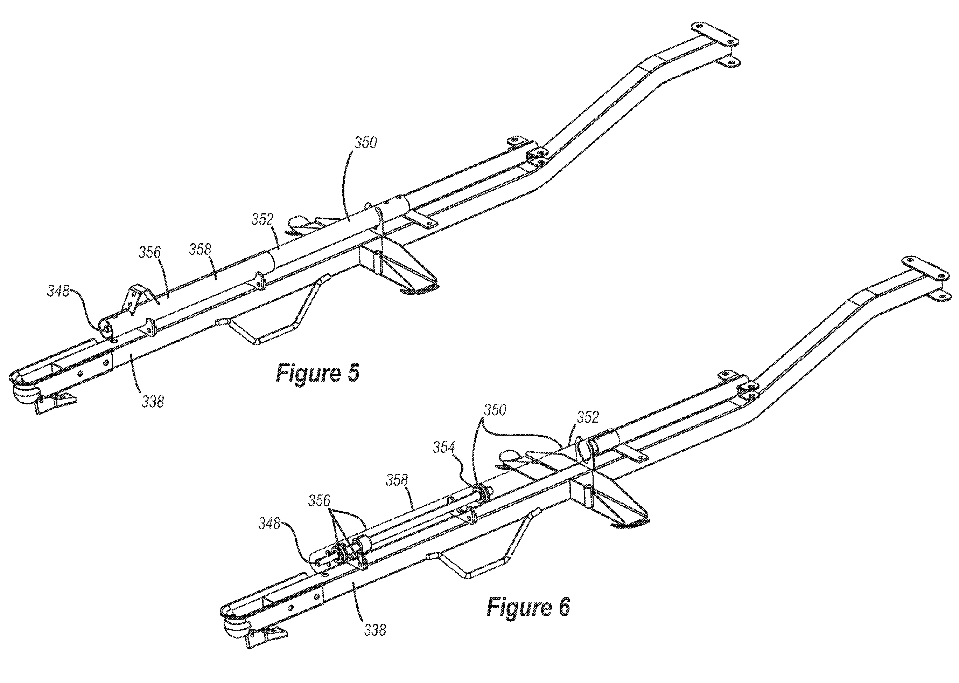

As shown in Figures 5-6, the shaft 348 may be coupled to the carriage assembly 350. For example, the shaft 348 and the carriage assembly 350 may be threadably connected. In particular, the carriage assembly may include a tube 352 and an engaging member 354, which may be disposed within the tube and may include one or more threads that may be threadably connected to one or more threads of the shaft 348.

In addition, the shaft 348 may be connected to the arm 338 using a mount 356. Specifically, the shaft 348 may be inserted through an opening in the mount 356 and the position of the mount along the shaft may be generally fixed using any suitable means.

The shaft 348 may also be connected to a crank, a handle and/or other device (such as the crank 340), which may be used to rotate the shaft. The crank 340 may be positioned to rotate in the same axis in which the shaft 348 rotates or in a different axis. For example, in some embodiments, a coupler may be used to interconnect the shaft 348 and the crank 340 to allow the crank to be positioned at an angle relative to the shaft (such as about a 90 degree angle, an oblique angle or any other suitable angle), as shown in Figure 3. This may allow the crank 340 to rotate in a different axis than the axis in which the shaft rotates. The coupler may also be configured to allow the crank 340 to be generally aligned with the shaft 348, which may allow the crank to rotate in the generally same axis in which the shaft rotates. Advantageously, the shaft 348 may be rotated by a number of different types of devices, such as the crank 340 or a motor. If a motor is used, that may allow the trailer to be automatically opened and closed, but this is not required.

Rotating the shaft 348 may help move the arm 338 and the axle 344 between extended and collapsed positions. For example, as the shaft 348 is rotated in a first direction, the threads of the shaft may engage the threads of the carriage assembly 350 to move the carriage assembly away from the mount 356. As the carriage assembly 350 moves away from the mount 356, the connecting members 346 may move the axle 344 and the arm 338 toward the extended position and away from the collapsed position. On the other hand, if the shaft 348 is rotated in an opposing second direction, the threads of the shaft may engage the threads of the carriage assembly 350 to move the carriage assembly towards the mount 356. As the carriage assembly 350 moves towards the mount 356, the connecting members 346 may move the axle 344 and the arm 338 toward the collapsed position and away from the extended position.

Desirably, unless a force is applied to the shaft 348, the carriage assembly 350 remains in a generally fixed position, which may prevent the trailer 336, the arm 338 and/or the axle 344 from moving between the use and storage positions. In greater detail, the carriage assembly 350 may be sized and configured to only move if the shaft 348 is rotated. Thus, if a rotational force is not applied to the shaft 348, then the carriage assembly may remain in a fixed position and that may prevent the trailer 336, the arm 338 and/or the axle 344 from moving between the use and storage positions. Therefore, the carriage assembly 350 may be used to lock the trailer 336, the arm 338 and/or the axle 344 in the use and storage positions. Moreover, the carriage assembly 350 may be further sized and configured to lock the trailer 336, the arm 338 and/or the axle 344 in a continuous or at least substantially continuous range of positions between and including the use and storage positions, if desired. It will be appreciated that the carriage assembly 350 may also be used to lock the trailer 336, the arm 338 and/or the axle 344 in other suitable positions and other portions of the adjustment assembly 342, if desired, may be used to lock the trailer, the arm and/or the axle in a desired position.

Portions of the mount 356 and the carriage assembly 350 may be slidably and/or telescopically coupled. For example, the mount 356 may include a tube 358, and the tube 352 of the carriage assembly 350 may be slidably and/or telescopically coupled to the tube 358. The tube 358 may be connected to the arm 338 using, for example, fasteners, pins, brackets, connectors, welds and/or any other suitable means. It will be appreciated, however, that the mount 356 and the carriage assembly 350 may have a variety of other suitable configurations, components, etc.

As shown in Figure 4, the axle 344 may include a first center portion 360 and a second center portion 362 pivotally or otherwise movably connected to the first center portion. The first center portion 360 may include one or more elongated supports. The second center portion 362 include one or more elongated supports. It will be appreciated, however, that the axle 344 may have a variety of other suitable configurations, components, etc.

Advantageously, as discussed above, the trailer may be used to carry various items. After using the trailer, one may move the trailer from the use position to the storage position to allow the trailer to be more efficiently stored. When use of the trailer is again desired, one may move the trailer from the storage position back to the use position.

Thus, as discussed above and shown in the accompanying drawings, a folding trailer may be capable of moving between a use position and a storage position, and the folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration; a towing arm movable between an extended position in which a portion of the towing arm extends beyond the front portion of the frame to facilitate attachment to a towing vehicle and a collapsed position in which the towing arm is at least substantially disposed underneath the frame; and an adjustment assembly that is sized and configured to adjust the position of the axle throughout an at least substantially continuous range of positions between and including the first position and the second position, the adjustment assembly also being sized and configured to adjust the position of the towing arm throughout an at least substantially continuous range of positions between and including the extended position and the collapsed position. The adjustment assembly may include a crank disposed at least proximate to a front portion of the towing arm, and the crank may be sized and configured to rotate in a first direction and a second direction. The crank may be sized and configured to, when rotated in the first direction, adjust the position of the axle towards the first position and adjust the position of the towing arm towards the extended position. In addition, the crank may be sized and configured to, when rotated in the second direction, adjust the position of the axle towards the second position and adjust the position of the towing arm towards the collapsed position. The adjustment assembly may be sized and configured to lock the axle in each position in the at least substantially continuous range of positions between and including the first position and the second position. The adjustment assembly may be sized and configured to lock the towing arm in each position in the at least substantially continuous range of positions between and including the extended position and the collapsed position. In one configuration, the adjustment assembly may further include a shaft and a carriage assembly that may be sized and configured to move along the shaft, the carriage assembly may be sized and configured to adjust the positioning of the axle and the towing arm by moving between positions along the shaft, and wherein the crank may be sized and configured to rotate the shaft to move the carriage assembly between the positions along the shaft. In one configuration, the adjustment assembly may further include a mount connected to the towing arm, the mount including a tube, a shaft connected to the tube of the mount, a carriage assembly that may be sized and configured to move along the shaft. In this configuration, the carriage assembly may be sized and configured to adjust the positioning of the axle and the towing arm by moving between positions along the shaft, and the carriage assembly may include a tube that telescopically couples the tube of the mount and an engaging member connected to and disposed within the tube of the carriage assembly. The engaging member may be sized and configured to engage the shaft. In addition, the crank may be sized and configured to rotate the shaft to move the carriage assembly between the positions along the shaft.

In addition, as discussed above and shown in the accompanying drawings, a folding trailer may be capable of moving between a use position and a storage position, and the folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration, the axle being located in generally the same plane in the first position and the second position, the axle being sized and configured to move in a generally rearward direction when the axle is moved from the first position to the second position; a towing arm, the towing arm being positioned in an extended position when the axle is in the first position, the towing arm being positioned in a retracted position when the axle in the second position, the towing arm being sized and configured to move in the generally rearward direction from the extended position to the retracted position when the axle is moved from the first position to the second position; and an adjustment assembly that is sized and configured to adjust the position of the axle between the first position and the second position and adjust the position of the towing arm between the extended position and the collapsed position. The adjustment assembly may include a crank disposed at least proximate to a front portion of the towing arm, the crank being sized and configured to rotate in a first direction and a second direction; wherein the crank is sized and configured to, when rotated in the first direction, adjust the position of the axle towards the first position and adjust the position of the towing arm towards the extended position; and wherein the crank is sized and configured to, when rotated in the second direction, adjust the position of the axle towards the second position and adjust the position of the towing arm towards the collapsed position. In one configuration, the adjustment assembly may further include a shaft; and a carriage assembly that is sized and configured to move along the shaft, the carriage assembly being sized and configured to adjust the positioning of the axle and the towing arm by moving between positions along the shaft; wherein the crank is sized and configured to rotate the shaft to move the carriage assembly between the positions along the shaft. In one configuration, the adjustment assembly may further include a mount connected to the towing arm, the mount including a tube; a shaft connected to the tube of the mount; a carriage assembly that is sized and configured to move along the shaft, the carriage assembly being sized and configured to adjust the positioning of the axle and the towing arm by moving between positions along the shaft. In this configuration, the carriage assembly may include a tube that telescopically couples the tube of the mount; and an engaging member connected to and disposed within the tube of the carriage assembly, the engaging member being sized and configured to engage the shaft. In addition, the crank may be sized and configured to rotate the shaft to move the carriage assembly between the positions along the shaft.

Moreover, as discussed above and shown in the accompanying drawings, a folding trailer may be capable of moving between a use position and a storage position, and the folding trailer may include a frame including a front portion, a rear portion, a right side and a left side; a wheel disposed proximate the frame; an axle connected to the wheel, the axle being movable between a first position in which the axle is generally aligned along an axis and a second position in which the axle is disposed in a folded configuration; a towing arm movable between an extended position in which a portion of the towing arm extends beyond the front portion of the frame to facilitate attachment to a towing vehicle and a collapsed position in which the towing arm is at least substantially disposed underneath the frame; and an adjustment assembly that is sized and configured to adjust the position of the axle between the first position and the second position. The adjustment assembly may be sized and configured to adjust the position of the towing arm between the extended position and the collapsed position, and the adjustment assembly may include a mount connected to the towing arm, the mount including a tube; a shaft connected to the tube of the mount; a carriage assembly that is sized and configured to move along the shaft, the carriage assembly being sized and configured to adjust the positioning of the axle and the towing arm by moving between positions along the shaft. The carriage assembly may include a tube that telescopically couples the tube of the mount; and an engaging member connected to and disposed within the tube of the carriage assembly, the engaging member being sized and configured to engage the shaft. The adjustment assembly may further include a crank sized and configured to rotate the shaft to move the carriage assembly between the positions along the shaft. The crank may disposed at least proximate to a front portion of the towing arm.

In addition, as discussed above and shown in the accompanying drawings, the crank of a folding trailer may be connected to a front portion of the towing arm and/or may extend through an opening in the towing arm.
Other suitable aspects, features, configurations and arrangements that may be used in connection with the trailer are shown and described in U.S. patent application serial no. 11/609,316, filed December 11, 2006, entitled TRAILER.; U.S. patent application serial no. 11/609,317, filed December 11, 2006, entitled TRAILER, now U.S. patent no. 7,452,00; U.S. patent application serial no. 11/609,318, filed December 11, 2006, entitled TRAILER; U.S. patent application serial no. 11/609,319, filed December 11, 2006, entitled TRAILER, now U.S. patent no. 7,475,901; U.S. patent application serial no. 11/609,327, entitled TRAILER, filed December 11, 2006; U.S. patent application serial no. 11/609,323, entitled TRAILER, filed December 11, 2006; and U.S. patent application serial no. 11/609,324, entitled TRAILER, filed December 11, 2006. These applications and patents are incorporated by reference in their entireties.

Although this invention has been described in terms of certain preferred embodiments, other embodiments apparent to those of ordinary skill in the art are also within the scope of this invention. Accordingly, the scope of the invention is intended to be defined only by the claims which follow.

## Claims

1. A folding trailer that is capable of moving between a use position and a storage position, the folding trailer comprising:
a frame including a front portion, a rear portion, a right side and a left side;
a wheel disposed proximate the frame;
an axle connected to the wheel, the axle being movable between a first position in which the axle is generally aligned along an axis and a second position in which the axle is disposed in a folded configuration;
a towing arm movable between an extended position in which a portion of the towing arm extends beyond the front portion of the frame to facilitate attachment to a towing vehicle and a collapsed position in which the towing arm is at least substantially disposed underneath the frame; and
an adjustment assembly that is sized and configured to adjust the position of the axle throughout an at least substantially continuous range of positions between and including the first position and the second position, the adjustment assembly also being sized and configured to adjust the position of the towing arm throughout an at least substantially continuous range of positions between and including the extended position and the collapsed position, the adjustment assembly including:
a crank disposed at least proximate to a front portion of the towing arm, the crank being sized and configured to rotate in a first direction and a second direction;
wherein the crank is sized and configured to, when rotated in the first direction, adjust the position of the axle towards the first position and adjust the position of the towing arm towards the extended position; and
wherein the crank is sized and configured to, when rotated in the second direction, adjust the position of the axle towards the second position and adjust the position of the towing arm towards the collapsed position.

2. The trailer as in Claim 1, wherein the adjustment assembly is sized and configured to lock the axle in each position in the at least substantially continuous range of positions between and including the first position and the second position.

3. The trailer as in Claim 1, wherein the adjustment assembly is sized and configured to lock the towing arm in each position in the at least substantially continuous range of positions between and including the extended position and the collapsed position.

4. The trailer as in Claim 1, wherein the adjustment assembly further includes:
a shaft; and
a carriage assembly that is sized and configured to move along the shaft, the carriage assembly being sized and configured to adjust the positioning of the axle and the towing arm by moving between positions along the shaft;
wherein the crank is sized and configured to rotate the shaft to move the carriage assembly between the positions along the shaft.

5. The trailer as in Claim 1, wherein the adjustment assembly further includes:
a mount connected to the towing arm, the mount including a tube;
a shaft connected to the tube of the mount;
a carriage assembly that is sized and configured to move along the shaft, the carriage assembly being sized and configured to adjust the positioning of the axle and the towing arm by moving between positions along the shaft, the carriage assembly including:
a tube that telescopically couples the tube of the mount; and
an engaging member connected to and disposed within the tube of the carriage assembly, the engaging member being sized and configured to engage the shaft; and
wherein the crank sized and configured to rotate the shaft to move the carriage assembly between the positions along the shaft.

6. A folding trailer that is capable of moving between a use position and a storage position, the folding trailer comprising:
a frame including a front portion, a rear portion, a right side and a left side;
a wheel disposed proximate the frame;
an axle connected to the wheel, the axle being movable between a first position in which the axle is generally aligned along an axis and a second position in which the axle is disposed in a folded configuration, the axle being located in generally the same plane in the first position and the second position, the axle being sized and configured to move in a generally rearward direction when the axle is moved from the first position to the second position;
a towing arm, the towing arm being positioned in an extended position when the axle is in the first position, the towing arm being positioned in a retracted position when the axle in the second position, the towing arm being sized and configured to move in the generally rearward direction from the extended position to the retracted position when the axle is moved from the first position to the second position; and
an adjustment assembly that is sized and configured to adjust the position of the axle between the first position and the second position and adjust the position of the towing arm between the extended position and the collapsed position, the adjustment assembly including:
a crank disposed at least proximate to a front portion of the towing arm, the crank being sized and configured to rotate in a first direction and a second direction;
wherein the crank is sized and configured to, when rotated in the first direction, adjust the position of the axle towards the first position and adjust the position of the towing arm towards the extended position; and
wherein the crank is sized and configured to, when rotated in the second direction, adjust the position of the axle towards the second position and adjust the position of the towing arm towards the collapsed position.

7. The trailer as in Claim 6, wherein the adjustment assembly further includes:
a shaft; and
a carriage assembly that is sized and configured to move along the shaft, the carriage assembly being sized and configured to adjust the positioning of the axle and the towing arm by moving between positions along the shaft;
wherein the crank is sized and configured to rotate the shaft to move the carriage assembly between the positions along the shaft.

8. The trailer as in Claim 6, wherein the adjustment assembly further includes:
a mount connected to the towing arm, the mount including a tube;
a shaft connected to the tube of the mount;
a carriage assembly that is sized and configured to move along the shaft, the carriage assembly being sized and configured to adjust the positioning of the axle and the towing arm by moving between positions along the shaft, the carriage assembly including:
a tube that telescopically couples the tube of the mount; and
an engaging member connected to and disposed within the tube of the carriage assembly, the engaging member being sized and configured to engage the shaft; and
wherein the crank is sized and configured to rotate the shaft to move the carriage assembly between the positions along the shaft.

9. A folding trailer that is capable of moving between a use position and a storage position, the folding trailer comprising:
a frame including a front portion, a rear portion, a right side and a left side;
a wheel disposed proximate the frame;
an axle connected to the wheel, the axle being movable between a first position in which the axle is generally aligned along an axis and a second position in which the axle is disposed in a folded configuration;
a towing arm movable between an extended position in which a portion of the towing arm extends beyond the front portion of the frame to facilitate attachment to a towing vehicle and a collapsed position in which the towing arm is at least substantially disposed underneath the frame; and
an adjustment assembly that is sized and configured to adjust the position of the axle between the first position and the second position, the adjustment assembly also being sized and configured to adjust the position of the towing arm between the extended position and the collapsed position, the adjustment assembly including:
a mount connected to the towing arm, the mount including a tube;
a shaft connected to the tube of the mount;
a carriage assembly that is sized and configured to move along the shaft, the carriage assembly being sized and configured to adjust the positioning of the axle and the towing arm by moving between positions along the shaft, the carriage assembly including:
a tube that telescopically couples the tube of the mount; and
an engaging member connected to and disposed within the tube of the carriage assembly, the engaging member being sized and configured to engage the shaft; and
a crank sized and configured to rotate the shaft to move the carriage assembly between the positions along the shaft.

10. The trailer as in Claim 9, wherein the crank is disposed at least proximate to a front portion of the towing arm.

11. The trailer as in any one of Claims 1-10, wherein the crank is connected to a front portion of the towing arm.

12. The trailer as in any one of Claims 1-10, wherein the crank extends through an opening in the towing arm.
